**Europäisches Patentamt**

**European Patent Office**

**Office européen des brevets**

(11) Veröffentlichungsnummer : **0 234 346 B1**

(12) **EUROPÄISCHE PATENTSCHRIFT**

(45) Veröffentlichungstag der Patentschrift :
16.01.91 Patentblatt 91/03

(51) Int. Cl.⁵ : **B23K 31/00**

(21) Anmeldenummer : **87101453.6**

(22) Anmeldetag : **03.02.87**

(54) Vorrichtung zum Fördern und Führen von auf Stoss zu verschweissenden Blechen oder Bändern.

(30) Priorität : **25.02.86 DE 3605946**

(43) Veröffentlichungstag der Anmeldung :
**02.09.87 Patentblatt 87/36**

(45) Bekanntmachung des Hinweises auf die
Patenterteilung :
**16.01.91 Patentblatt 91/03**

(84) Benannte Vertragsstaaten :
**AT BE CH DE ES FR GB GR IT LI LU NL SE**

(56) Entgegenhaltungen :
**DE-A- 1 474 263
DE-B- 1 288 548
DE-B- 1 427 869
US-A- 3 325 623**

(73) Patentinhaber : **Thyssen Stahl
Aktiengesellschaft
Kaiser-Wilhelm-Strasse 100
D-4100 Duisburg 11 (DE)**

(72) Erfinder : **Sturm, Josef
Kollwitzstrasse 6
D-4100 Duisburg 18 (DE)**

(74) Vertreter : **Cohausz & Florack Patentanwälte
Postfach 14 01 61 Schumannstrasse 97
D-4000 Düsseldorf 1 (DE)**

# Beschreibung

Die Erfindung betrifft eine Vorrichtung zum Fördern und Führen von auf Stoß zu verschweißenden Blechen oder Bändern mit in spitzem Winkel α zueinander liegende Förderebenen bildenden Fördermitteln, und seitliche Führung.

Eine Vorrichtung ist aus der DE-B 12 88 548 bekannt. Allerdings sind bei der bekannten Vorrichtung keine Mittel zum Führen der Bänder vorgesehen.

Zum Längsnahtschweißen von Blechen oder Bändern müssen die zu verschweißenden Bleche bzw. Bänder so geführt werden, daß deren Kanten fugenlos aneinanderliegen, um problemlos verschweißt werden zu können. Zum Verschweißen von Blechen ist es bekannt, die Bleche aneinanderzulegen, einzuspannen und beim Schweißen eine Schweißeinrichtung längs der zu verschweißenden Kanten zu bewegen. Bei biegsamen Blechen ist es dabei schwierig, die zu verschweißenden Kanten fugenlos aneinanderzulegen und in dieser Lage einzuspannen. Dabei tritt auch der Nachteil auf, daß die Bleche ungewollt überlappen. Ein kontinuierlicher Betrieb ist unabhängig von der Blechdicke nicht möglich. Ein weiterer Nachteil der bekannten Verfahrensweise liegt darin, daß sowohl die Bleche oder Bänder als auch die Schweißeinrichtung bewegt werden müssen. Ein kontinuierlicher Transport der Bleche oder Bänder durch die Schweißanlage ist nicht möglich. Die Schweißeinrichtung kann dabei ebenfalls nicht kontinuierlich arbeiten, und die Länge der Schweißnaht ist durch den Verfahrweg der Schweißeinrichtung begrenzt.

Die aus der US-A- 3 325 623 bekannte Vorrichtung zum Verschweißen zweier Bänder entspricht der gattungsgemäßen Vorrichtung. Allerdings dient die bekannte Vorrichtung nicht dem fugenlosen Verschweißen der Bänder auf Stoß sondern überlappt. Aufgrund dieses Unterschiedes zu der gattungsgemäßen Vorrichtung ist die seitliche Führung der Bänder zueinander vor der Schweißstelle nicht problematisch und es sind bei der bekannten Vorrichtung dementsprechend auch keine Mittel vorgesehen, um für ein lagegenaues Hinführen der Bänder zur Schweißstelle zu sorgen. Erst an der Schweißstelle werden die Bänder durch seitliche Druckrollen gegeneinander und durch obere und untere Druckrollen der überlappte Nahtbereich gepreßt. Zur seitlichen Führung der getrennt zur Schweißstelle geförderten Bänder sind Rollen vorgesehen. Diese können sich aber wegen der gegenseitigen Behinderung nicht bis in den Abschnitt kurz vor der Schweißstelle hineinerstrecken, weil dann eine gegenseitige Behinderung der seitlichen Führungsrollen der beiden zu verschweißenden Bänder und auch der Führungsrollen mit den vertikal aufeinander zugeführten Bänder auftreten. Gerade in dem Abschnitt unmittelbar vor der Schweißstelle ist aber eine Führung der miteinander zu verschweißenden Bänder oder Bleche von entscheidender Bedeutung, damit die Bänder oder Bleche zum fugenlosen Verschweißen auf Stoß lagegenau zur Schweißstelle geführt werden.

Der Erfindung liegt die Aufgabe zugrunde, eine Vorrichtung zum Führen von auf Stoß zu verschweißenden Blechen oder Bändern zu schaffen, welche geeignet sind, Bänder oder Bleche kontinuierlich an einer ortsfesten Schweißeinrichtung derart vorbeizuführen, daß ihre zu verschweißenden Kanten exakt aneinanderliegen, um die Fehlerquote beim Schweißen herabzusetzen.

Die erfindungsgemäße Vorrichtung löst die gestellte Aufgabe dadurch, daß in derselben Vertikalebene liegende Führungsflächen vorgesehen sind, an denen die Bleche oder Bänder mit jeweils einer ihrer Seitenkanten anliegen, und daß die Fördermittel aus in Richtung auf die Mittelachse der Vorrichtung schräggestellten Förderrollen bestehen. Die Förderrollen dienen dabei gleichzeitig als Führungsmittel. Die Bleche bzw. Bänder können durch die exakte seitliche Führung nicht mehr überlappen, und ein kontinuierlicher Betrieb ist möglich, was zur Verarbeitung von Bändern besonders wichtig ist.

Die Schweißeinrichtung kann stationär angeordnet sein, sie kann sowohl kontinuierlich als auch intermittierend arbeiten. Der Transport der Bleche bzw. Bänder wird durch die Verarbeitung in der Schweißanlage nicht unterbrochen. Die Länge der Schweißnaht ist unbegrenzt. Sowohl Einzelbleche als auch Bänder können verarbeitet werden.

Um die Bänder oder Bleche genau zu führen, ist es vorteilhaft, in der Vorrichtung zusätzliche seitliche Führungsmittel vorzusehen. Vorteilhaft sind dabei als Führungsmittel Lineale oder Rollen.

Um den Transport der Bleche bzw. Bänder nicht zu behindern, wird weiter vorgeschlagen, daß hinter der Führung in Laufrichtung der Bänder oder Bleche Klemmrollen über und unter den Bändern oder Blechen angeordnet sind. Die Klemmrollen brauchen nicht angetrieben zu sein, sondern können frei laufende Rollen sein.

Dabei ist es besonders vorteilhaft, zwei Paare von in Laufrichtung hintereinander angeordneten Klemmrollen zu verwenden, zwischen denen eine Schweißeinrichtung angeordnet sein kann. Dadurch ist es auch bei dem Verschweißen von Blechen nicht nötig, eine durchgehende Schweißnaht vorzusehen. Die Bleche brauchen vielmehr an ihren Kanten nur punktförmig verschweißt zu werden, ohne daß sich kurz vor dem Schweißen die relative Lage des einen Bleches zum anderen, z. B. durch Verrutschen, ändert.

Zwischen den Klemmrollen-Paaren können Kontrolleinrichtungen angeordnet sein, die zum einen den Abstand zwischen den zu verschweißenden Kanten und zum anderen die fertige Schweißnaht prüfen.

Ein Ausführungsbeispiel der Erfindung ist in den Zeichnungen dargestellt und wird im folgenden näher beschrieben. Es zeigen :

Fig. 1 eine Draufsicht zweier längsnahtgeschweißter Bleche,

Fig. 2 eine Draufsicht auf zwei Bänder, die zum Aneinanderliegen ihrer zu verschweißenden Kanten geführt werden,

Fig. 3 eine Seitenansicht der Anordnung nach Fig. 2,

Fig. 4 einen Schnitt längs der Linie A-B aus Fig. 3,

Fig. 5 einen Schnitt längs der Linie C-D aus Fig. 3,

Fig. 6 einen Vertikalschnitt der Vorrichtung,

Fig. 7 Schnitte längs der Linien E-F, G-H, I-K aus Fig. 6,

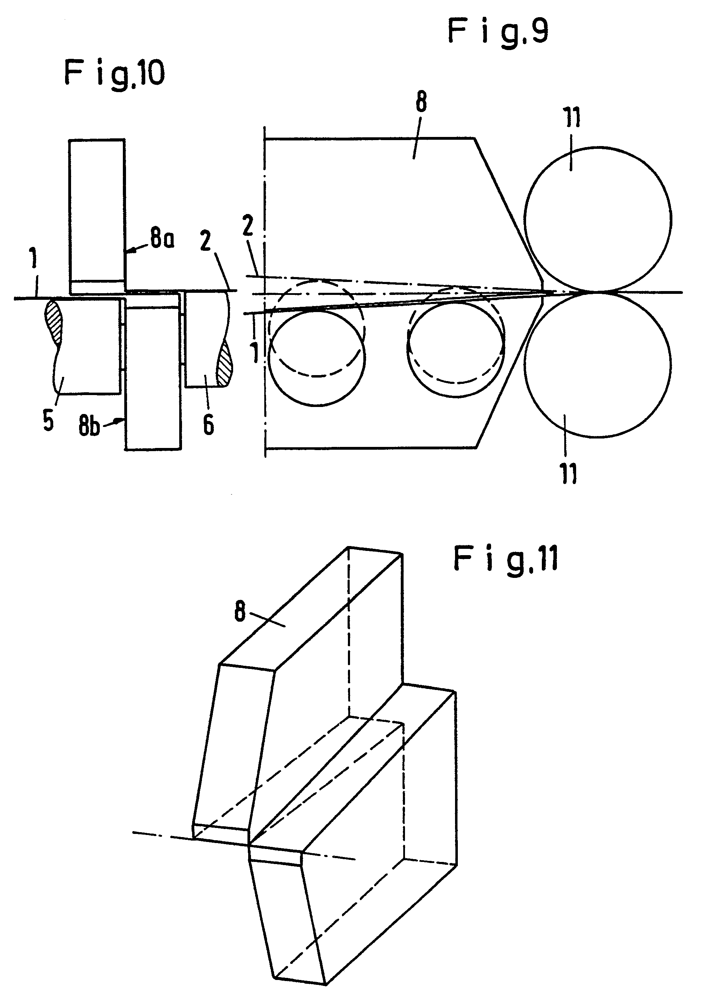

Fig. 8 eine Draufsicht der Vorrichtung nach Fig. 6,

Fig. 9 einen Ausschnitt aus Fig. 6 im Bereich der Klemmrollen,

Fig. 10 eine Draufsicht auf die Anordnung nach Fig. 9 entgegen der Förderrichtung der Bänder,

Fig. 11 eine perspektivische Ansicht Vorrichtung.

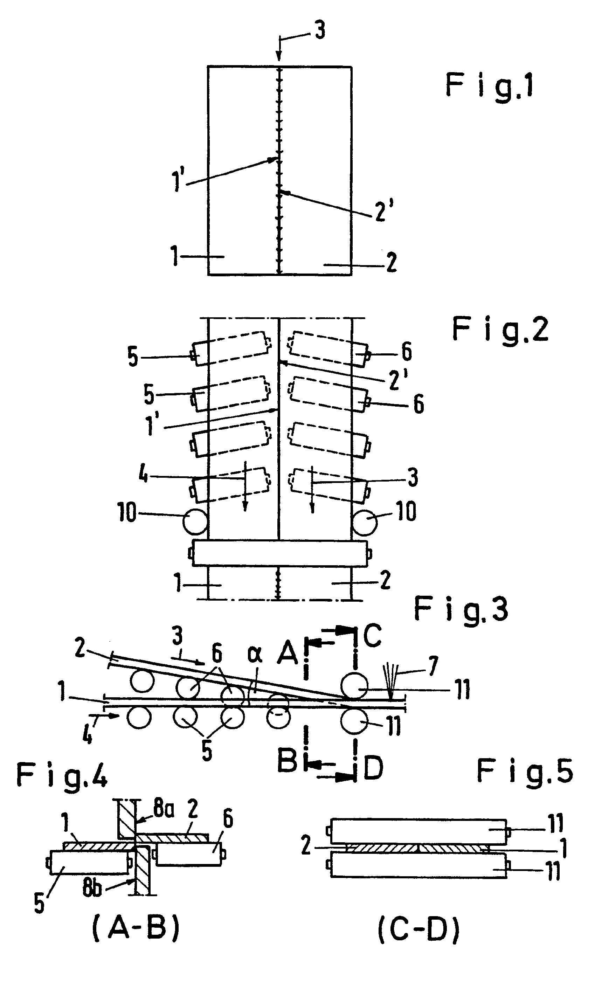

Fig. 1 zeigt eine Draufsicht auf zwei Bleche 1, 2, die an ihren Kanten 1', 2' längsnahtgeschweißt sind.

In Fig. 2 ist die Zuführung der beiden Bleche 1, 2 zum Anliegen der zu verschweißenden Kanten aneinander dargestellt. Die beiden Bleche oder Bänder bewegen sich in spitzem Winkel α aufeinander zu, bis ihre Kanten 1', 2', die miteinander verschweißt werden sollen, aneinanderstoßen. Die Bewegungsrichtung der Bleche bzw. Bänder ist durch Pfeile 3 und 4 dargestellt. Nach Aneinanderstoßen der Kanten werden die Bleche 1, 2 durch seitliche Rollen 10 so geführt, daß die Kanten 1', 2' fugenlos aneinanderliegen, aber nicht überlappen. Die Bleche bzw. Bänder werden durch Rollen 5, 6, von denen hier nur einige dargestellt sind, in Richtung der Pfeile 3, 4 gefördert. Um die Fläche 1, 2 mit ihren Kanten 1', 2' an die in den weiteren Figuren dargestellten Führungsflächen 8a, 8b zu drücken, sind die Rollen 5, 6 in Richtung auf die Mittelachse der Vorrichtung schräggestellt, so daß sie nicht nur eine Kraft in Transportrichtung auf die Bleche ausüben, sondern auch in Richtung der Mittelachse der Vorrichtung.

Wie in Fig. 3, einer Seitenansicht der Anordnung nach Fig. 2, dargestellt ist, bewegen sich die Bleche 1, 2 unter dem spitzen Höhenwinkel α aufeinander zu. An der Stelle, an der die beiden Bleche 1, 2 auf gleicher Höhe zusammenkommen und an der die zu verschweißenden Kanten 1', 2' aneinander liegen, sind oberhalb und unterhalb der Bleche Klemmrollen 11 vorgesehen. Die Klemmrollen 11 halten die Bleche 1, 2 in der zum Verschweißen vorgesehenen Lage.

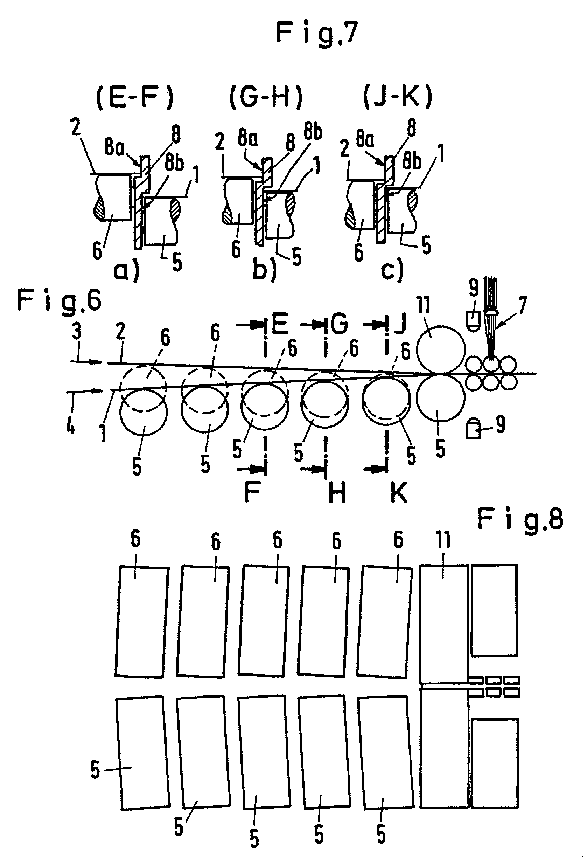

In Vorschubrichtung hinter den Klemmrollen 11 ist eine Schweißeinrichtung 7 vorgesehen. Hinter der Schweißeinrichtung 7 folgen noch in Fig. 3 nicht dargestellte Einrichtungen für die allgemeine Nacharbeit, wie Schweißnahtputzvorrichtungen und Einrichtungen zur Schweißnahtkontrolle sowie der Abfuhrrollgang. In Fig. 6 mit den zugehörigen Schnittzeichnungen Fig. 7a, 7b, 7c ist zur Verdeutlichung eine Seitenansicht der erfindungsgemäßen Vorrichtung mit mehr Details dargestellt. Wie in Fig. 2 und 3 gezeigt, besteht die Zuführung aus zwei Förderbahnen (Rollgänge), die aus den Rollen 5 und 6 gebildet sind, mit unterschiedlichen Blechaufgabehöhen. Die fördernden, angetriebenen Rollen 5, 6 stehen in einem spitzen Winkel, sowohl seitlich als auch von oben gesehen, zueinander. Seitliche Rollen 10 drücken die Bleche bzw. die Bänder 1, 2 bei der Vorwärtsbewegung gleichzeitig gegen ein zwischen den Bändern 1, 2 angeordnete Führung 8 mit Führungsflächen 8a, 8b, die in der Mittelachse der gesamten Vorrichtung liegt. Hierdurch wird erreicht, daß die beiden Bleche 1, 2 beim Zusammenkommen an den Klemmrollen 11 auf gleicher Höhe mit ihren Längskanten fugenlos aneinanderliegen. Die Klemmrollen 11 schließen so eng wie möglich an die Führung 8 an.

Die der Führung 8 in Vorschubrichtung nachfolgende Klemmrolleneinheit besteht aus einem angetriebenen Klemmrollenpaar 11. Dieses erfaßt die ankommenden Bleche und hält sie so unter Spannung, daß die bleche in der Schweißposition die gleiche Lage zueinander haben. Die Schweißeinrichtung ist dabei hinter dem Klemmrollenpaar 11 angeordnet.

Die versetzte Schweißeinrichtung kann als Laserschweißeinrtchung ausgebildet sein. Man hat dabei die Möglichkeit, dem Laserstrahl vom Resonator bis zum Umlenkspiegel der Fokussiereinheit einen festen, optimalen, von Maschinenbewegungen und von Umwelteinflüssen freien und kurzen Weg zu geben. Ferner ist es dadurch möglich, Blechtafeln intermittierend und Blechbänder vom Coil kontinuierlich zu verschweißen.

Durch die scherenförmig zusammenlaufenden Rollenbahnen sind die zu verschweißenden Bleche in ihrer Länge nicht beschränkt.

Durch die vorgesehene Klemmrolleneinheit wird gewährleistet, daß kein Kantenversatz der zu verschweißenden Bleche an der Schweißstelle entsteht. Durch die in der Anordnung mögliche untere Schutzgaszuführung und Rauchgasabsaugung kann der Schweißnahtdurchhang beeinflußt werden.

Die seitliche Führung 8 kann als Gleitanschlaglineal, als Führungsleiste, Druckrolle oder andere Anordnungen ausgebildet sein. Bei einer Ausbildung als Führungsleiste oder Gleitanschlaglineal wird der Grat an der Seitenkante infolge der Reibung geglättet.

## Ansprüche

1. Vorrichtung zum Fördern und Führen von auf Stoß zu verschweißenden Blechen (1, 2) oder Bändern mit in spitzem Winkel α zueinander liegende Förderebenen bildenden Fördermitteln (5,6) und seitlicher Führung (8), **dadurch gekennzeichnet,** daß in derselben Vertikalebene liegende Führungsflächen (8a,8b) vorgesehen sind, and denen die Bleche (1,2) oder Bänder mit jeweils einer ihrer Seitenkanten anliegen, und daß die Fördermittel aus in Richtung auf die Mittelachse der Vorrichtung schräggestellten Förderrollen (5,6) bestehen.

2. Vorrichtung nach Anspruch 1, **gekennzeichnet durch** zusältzliche seitliche Führungsmittel (10) die die Bleche oder Bänder (1,2), an ihren anderen Seitenkanten führen.

3. Vorrichtung nach Anspruch 2, **dadurch gekennzeichnet,** daß die zusältzlichen seitlichen Führungsmittel (10) Lineale oder Rollen (1O) sind.

4. Vorrichtung nach einem der Ansprüche 1 bis 3, **dadurch gekennzeichnet,** daß hinter der Führung (8) in Laufrichtung der Bänder oder Bleche (1,2) über und unter denselben Klemmrollen (11) angeordnet sind.

# Claims

1. An apparatus for the conveying and guiding of plates or strips(1, 2) to be butt-welded, having conveying means (5, 6) forming conveying planes lying at an acute angle α in relation to one another, and a lateral guide (8), characterized in that guide surfaces (8a, 8b) are provided which lie in the same vertical plane and against which the plates or strips (1, 2) bear via one of their lateral edges, and the conveying means comprise conveying rollers (5, 6) disposed at an angle in the direction of the central axis of the apparatus.

2.. An apparatus according to claim 1, characterized by additional lateral guide means (10) which guide the plates or strips (1, 2) at their other lateral edges.

3. An apparatus according to claim 2, characterized in that the additional lateral guide means (10) are straightedges or rollers (10).

4. An apparatus according to one of claims 1 to 3, characterized in that clamping rollers (11) are disposed after the guide (8) above and below the strips or plates (1, 2) in the direction in which they run.

# Revendications

1. Dispositif pour transporter et guider des tôles (1, 2) ou bandes à souder par électropercussion, avec des moyens de transport (5, 6) formant des plans de transport se trouvant à un angle aigu α et glissière de guidage latérale (8), caractérisé en ce que des surfaces de guidage (8a,8b) se trouvant dans le même plan vertical sont prévues, contre lesquelles s'appuient les tôles (1, 2) ou bandes par une de leurs arêtes latérales respectivement, et que les moyens de transport sont constitués par des rouleaux transporteurs (5, 6) disposés inclinés dans la direction de l'axe médian du dispositif.

2. Dispositif selon la revendication 1, caractérisé par des moyens de guidage latéraux (10) additionnels qui guident les tôles ou bandes (1, 2) par leurs autres arêtes latérales.

3. Dispositif selon la revendication 2, caractérisé en ce que les moyens de guidages latéraux (10) additionnels sont des règles ou des rouleaux (10).

4. Dispositif selon l'une des revendications 1 à 3, caractérisé en ce que des rouleaux de serrage (11) sont disposés au-dessus et au-dessous des bandes ou tôles (1, 2) en arrière de la glissière de guidage (8) dans la direction de déplacement des bandes ou tôles.

Fig.1

Fig.2

Fig.3

Fig.4

Fig.5

(A-B)

(C-D)

Fig.7

(E-F)    (G-H)    (J-K)

a)    b)    c)

Fig.6

Fig.8

F i g.10

F i g.9

F i g.11